# EUROPEAN PATENT APPLICATION

(11) **EP 2 523 509 A1**
(43) Date of publication of application: **14.11.2012**
(21) Application number: 11731830.3
(22) Date of filing: 07.01.2011
(51) Int. Cl.: H04W 52/04, H04W 16/32, H04W 52/02, H04W 92/20

(54) **MOBILE COMMUNICATION METHOD AND WIRELESS BASE STATION**

(30) Priority: 08.01.2010 JP 2010003210
(71) Applicant: NTT DoCoMo, Inc., Tokyo 100-6150 (JP)
(72) Inventor: IWAMURA, Mikio, Tokyo 100-6150 (JP)
(74) Representative: HOFFMANN EITLE
(86) International application number: PCT/JP2011/050147
(87) International publication number: WO 2011/083832

(57) **Abstract**

The mobile communication method according to the present invention includes a step A of transmitting, by a mobile station UE communicating in a cell #A of a first frequency f1, a "proximity indication" to a radio base station eNB#A managing the cell #A, when the mobile station UE detects an entry in to or an exit from a predetermined area #1 corresponding to a CSG cell #1 of a second frequency f2 for which the mobile station UE has the access permission, a step B of transmitting, by the radio base station eNB#A, a transmission power control message to a radio base station HeNB#1 managing the CSG cell #1, in accordance with the "proximity indication", and a step C of controlling, by the radio base station HeNB#1, the transmission power of the signal in the CSG cell #1, based on the transmission power control message.

## Description

### [Technical Field]

The present invention relates to a mobile communication method and a radio base station.

### [Background Art]

Currently, "Energy Saving" in a mobile communication system is in the limelight. "Energy Saving" in a mobile communication system is the concept of reducing the transmission power of a signal in an entire network, by reducing the transmission power of a signal, and by stopping the transmission of a signal in a cell that does not have any visiting mobile stations or a cell whose traffic is less.

In the case of a radio base station HeNB (Home eNB) managing a CSG (Closed Subscriber Group) cell, particularly, because there are various occasions on which a user of a mobile station UE goes out during the day, the possibility of stopping the transmission of signals in the CSG cell is desired.

### [Summary of Invention]

### [Technical Problem]

However, as described above, a problem is that the conventional mobile communication systems are not provided with a mechanism for reducing the transmission power of a signal and stopping the transmission of a signal in a particular cell.

Therefore, the present invention has been achieved in view of the above problem, and an object thereof is to provide a mobile communication method and a radio base station by which it is possible to efficiently realize "Energy Saving".

### [Solution to Problem]

A first characteristic of the present embodiment is summarized in that a mobile communication method comprising, a step A of transmitting, by a mobile station communicating in a cell of a first frequency, instruction information to a first radio base station managing the cell of the first frequency, when the mobile station detects an entry in to or an exit from a predetermined area corresponding to a cell of a second frequency for which the mobile station has the access permission, and a step B of transmitting, by the first radio base station, a transmission power control message to a second radio base station managing the cell of the second frequency, in accordance with the instruction information, and a step C of controlling, by the second radio base station, the transmission power of a signal in the cell of the second frequency, based on the transmission power control message.

A second characteristic of the present embodiment is summarized in that a radio base station managing a cell of a first frequency, comprising, a reception unit configured to receive instruction information from a mobile station communicating in the cell of the first frequency, when the mobile station detects an entry in to or an exit from a predetermined area corresponding to a cell of a second frequency for which the mobile station has the access permission, and a transmission unit configured to transmit a transmission power control message for controlling the transmission power of a signal in the second cell, to a radio base station managing the cell of the second frequency, in accordance with the instruction information.

A third characteristic of the present embodiment is summarized in that a radio base station managing a cell of a second frequency, comprising, a reception unit configured to receive a transmission power control message from a radio base station managing a cell of a first frequency that receives the instruction information from a mobile station communicating in the cell of the first frequency, when the mobile station detects an entry in to or an exit from a predetermined area corresponding to the cell of the second frequency for which the mobile station has the access permission, and a control unit configured to control the transmission power of a signal in the cell of the second frequency, based on the transmission power control message.

### [Advantageous Effects of Invention]

As explained above, according to the present invention, a mobile communication method and a radio base station by which it is possible to efficiently realize "Energy Saving" can be provided.

### [Brief Description of Drawings]

[Fig. 1] Fig. 1 is a diagram showing the entire configuration of a mobile communication system according to a first embodiment of the present invention.
[Fig. 2] Fig. 2 is a functional block diagram of a radio base station according to the first embodiment of the present invention.
[Fig. 3] Fig. 3 is a functional block diagram of a radio base station according to the first embodiment of the present invention.
[Fig. 4] Fig. 4 is a sequence diagram illustrating an operation of the mobile communication system according to the first embodiment of the present invention.

### [Description of Embodiments]

### (Configuration of mobile communication system according to first embodiment of the present invention)

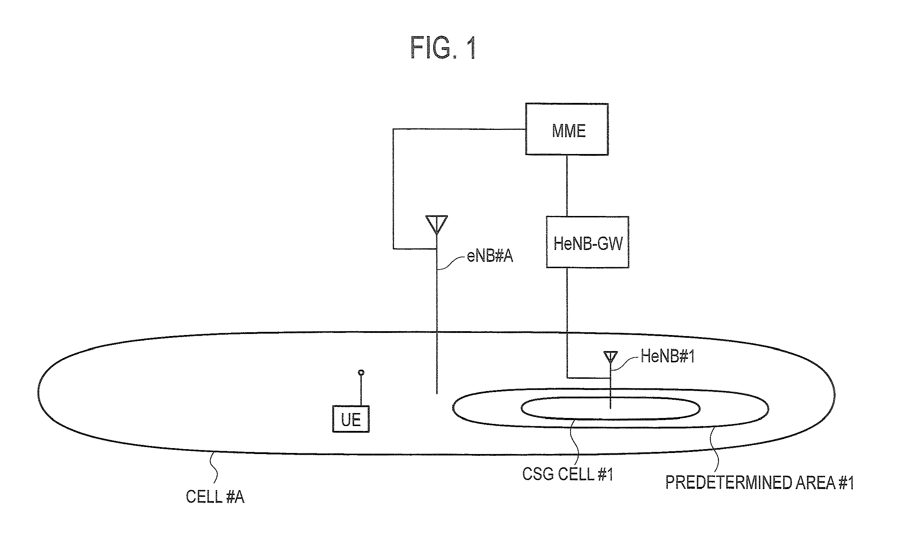

With reference to Fig. 1 to Fig. 3, the configuration of a mobile communication system according to a first embodiment of the present invention will be described.

The mobile communication system according to the present embodiment is a mobile communication system of the LTE scheme, and in the mobile communication system, as shown in Fig. 1, a cell #A of a frequency f1 that is managed by a radio base station eNB#A and a CSG cell #1 of a frequency f2 that is managed by a radio base station HeNB#1 are located. Here, the CSG cell #1 is located within the area of the cell #A.

In the mobile communication system according to the present embodiment, the mobile station UE is configured to manage a predetermined area corresponding to the frequency of a CSG cell for which the mobile station UE has the access permission. For example, in the example shown in Fig. 1, the mobile station UE is configured to manage the predetermined area #1 corresponding to the frequency f2 of the CSG cell #1 for which the mobile station UE has the access permission.

Here, the predetermined area #1 may be a larger area than the CSG cell #1 or may be equal to the CSG cell #1 in size.

The predetermined area #1 is an area specified by the fingerprint information, and is the information stored by the mobile station UE regarding the "neighboring environment" in which the aforementioned CSG cell #1 exists.

For example, the predetermined area #1 may be information based on the ID of a neighboring macro cell, the reception level of a signal from a macro cell, and the GPS information, or may be the location registration area ID and PLMN ID, and what type of information to use may depend on implementation.

Furthermore, the mobile station UE is configured to transmit an "entering proximity indication" including the CGI (Cell Global Identity) and TAI (Tracking Area Identity) of the CSG cell #1, to the radio base station eNB#A, when the mobile station UE detects an entry in to the predetermined area #1, during communication in cell #A.

On the other hand, the mobile station UE is configured to transmit a "leaving proximity indication" including the CGI and TAI of the CSG cell #1, to the radio base station eNB#A, when the mobile station UE detects an exit from the predetermined area #1, during communication in cell #A.

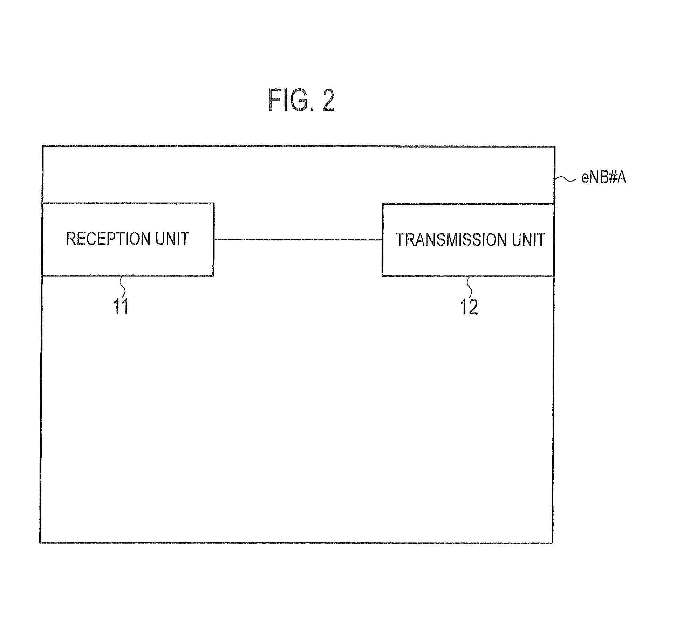

As illustrated in Fig. 2, the radio base station eNB#A includes a reception unit 11 and a transmission unit 12.

The reception unit 11 is configured to receive a "proximity indication", specifically, an "entering proximity indication" or a "leaving proximity indication", from the mobile station UE.

The transmission unit 12 is configured to transmit a transmission power control message, to the radio base station HeNB#1, via a mobile switching center MME (Mobility Management Entity) and a gateway device HeNB-GW (Gateway), in accordance with the "proximity indication" received by the reception unit 11.

That is, when the reception unit 11 receives an "entering proximity indication", the transmission unit 12 is configured to transmit a transmission power control message indicating the same.

Furthermore, when the reception unit 11 receives a "leaving proximity indication", the transmission unit 12 is configured to transmit a transmission power control message indicating the same.

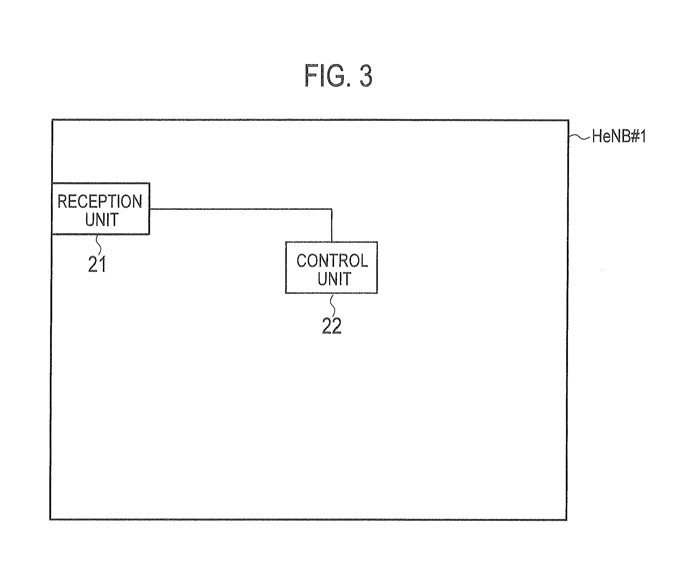

As illustrated in Fig. 3, the radio base station HeNB#1 includes a reception unit 21 and a control unit 22.

The reception unit 21 is configured to receive the aforementioned transmission power control message from the radio base station eNB#A, via the mobile switching center MME and the gateway device HeNB-GW.

The control unit 22 is configured to control the transmission power of a signal in the CSG cell #1, based on the transmission power control message received by the reception unit 21.

For example, when the reception unit 21 receives a transmission power control message indicating the reception of an "entering proximity indication" from the radio base station eNB#A, the control unit 22 may be configured to start the transmission of a signal in the CSG cell #1, in accordance with the transmission power control message.

Alternatively, when the reception unit 21 receives a transmission power control message indicating the reception of an "entering proximity indication" from the radio base station eNB#A, the control unit 22 may change the transmission power of a signal in the CSG cell #1 such that the transmission power becomes more than a predetermined value, in accordance with the transmission power control message.

Furthermore, when the reception unit 21 receives a transmission power control message indicating the reception of a "leaving proximity indication" from the radio base station eNB#A, the control unit 22 may be configured to stop the transmission of a signal in the CSG cell #1, in accordance with the transmission power control message.

Alternatively, when the reception unit 21 receives a transmission power control message indicating the reception of a "leaving proximity indication" from the radio base station eNB#A, the control unit 22 may change the transmission power of a signal in the CSG cell #1 such that the transmission power becomes less than a predetermined value, in accordance with the transmission power control message.

The control unit 22 may be configured to slowly change the transmission power of a signal in the CSG cell #1 so as to suppress the effect of change in the amount of interference with respect to a neighboring cell and a mobile station UE.

### (Operation of the mobile communication system according to the first embodiment of the present invention)

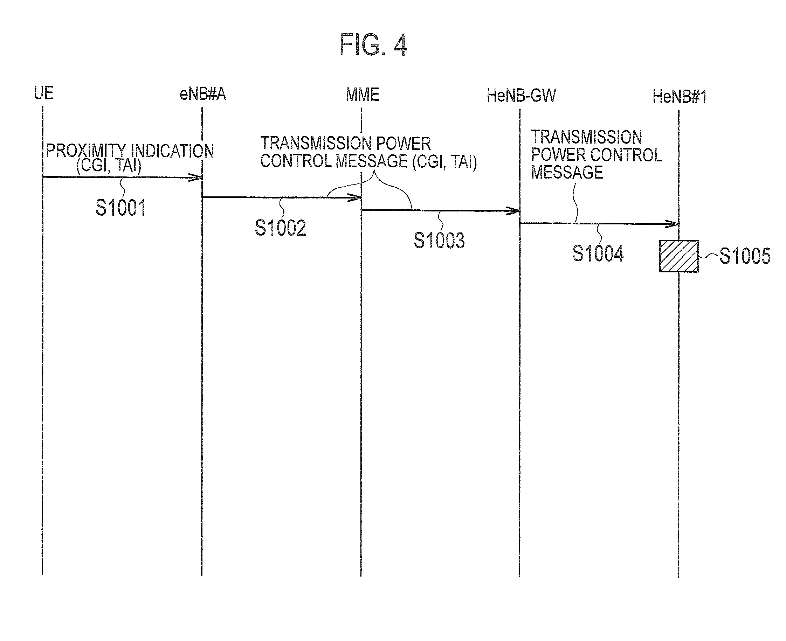

With reference to Fig. 4, the operation of the mobile communication system according to the first embodiment of the present invention will be described.

As illustrated in Fig. 4, in step S1001, when a mobile station UE that is communicating in a cell #A of a first frequency f1 detects an entry in to or an exit from a predetermined area #1 corresponding to a CSG cell #1 of a second frequency f2 for which the mobile station UE has the access permission, the mobile station UE transmits an "entering proximity indication" or a "leaving proximity indication" including the CGI and TAI of the CSG cell #1, to the radio base station eNB#A managing the cell #A.

In step S1002, the radio base station eNB#A transmits a transmission power control message including the CGI and TAI of the CSG cell #1, to the mobile switching center MME. The transmission power control message includes information about whether the message is related to an "entering proximity indication" or a "leaving proximity indication".

In step S1003, the mobile switching center MME transmits the transmission power control message including the CGI and TAI of the CSG cell #1, to the gateway device HeNB-GW.

In step S1004, the gateway device HeNB-GW transmits the transmission power control message, to the radio base station HeNB#1 managing the CSG cell #1.

If the received transmission power control message includes information indicating that the message is related to an "entering proximity indication", then in step S1005, the radio base station HeNB#1 starts the transmission of the signal in the CSG cell #1, else the radio base station HeNB#1 changes the transmission power of the signal in the CSG cell #1 so as to become above a predetermined value.

On the other hand, if the received transmission power control message includes information indicating that the message is related to a "leaving proximity indication", then the radio base station HeNB#1 stops the transmission of the signal in the CSG cell #1, else the radio base station HeNB#1 changes the transmission power of the signal in the CSG cell #1 so as to become below a predetermined value.

### (Operation and Effect of the mobile communication system according to the first embodiment of the present invention)

According to the mobile communication system of the first embodiment of the present invention, because the radio base station eNB#A transmits a transmission power control message, to the radio base station HeNB#1, in accordance with the "proximity indication" transmitted by the mobile station UE, and the radio base station HeNB#1 can control the transmission power of the signal in the CSG cell #1 in accordance with the transmission power control message, "Energy Saving" can be realized efficiently.

The characteristics of the present embodiment as described above may be expressed as follows.

A first characteristic of the present embodiment is summarized as a mobile communication method having a step A of transmitting, by a mobile station UE communicating in a cell #A of a first frequency f1, a "proximity indication (instruction information)" to a radio base station eNB#A (first radio base station) managing the cell #A, when the mobile station UE detects an entry in to or an exit from a predetermined area #1 corresponding to a CSG cell #1 of a second frequency f2 for which the mobile station UE has the access permission, a step B of transmitting, by the radio base station eNB#A, a transmission power control message to a radio base station HeNB#1 (second radio base station) managing the CSG cell #1, in accordance with the "proximity indication", and a step C of controlling, by the radio base station HeNB#1, the transmission power of the signal in the CSG cell #1, based on the transmission power control message.

In the first characteristic of the present embodiment, in the step B, when the radio base station eNB#A receives an "entering proximity indication (instruction information indicating that an entry by the mobile station UE, in to the predetermined area #1, has been detected)", the radio base station eNB#A transmits a transmission power control message indicating the same, to the radio base station HeNB#1, and in the step C, the radio base station HeNB#1 may start the transmission of the signal in the CSG cell #1, in accordance with the transmission power control message.

In the first characteristic of the present embodiment, in the step B, when the radio base station eNB#A receives a "leaving proximity indication (instruction information indicating that an exit by the mobile station UE, from the predetermined area #1, has been detected)", the radio base station eNB#A transmits a transmission power control message indicating the same, to the radio base station HeNB#1, and in the step C, the radio base station HeNB#1 may stop the transmission of the signal in the CSG cell #1, in accordance with the transmission power control message.

The second characteristic of the present embodiment is summarized as a radio base station eNB#A managing a cell #A and including a reception unit 11 configured to receive a "proximity indication" from a mobile station UE communicating in the cell #A, when the mobile station UE detects an entry in to or an exit from the predetermined area #1, and a transmission unit 12 configured to transmit a transmission power control message to a radio base station HeNB#1, in accordance with the "proximity indication".

The third characteristic of the present embodiment is summarized as a radio base station HeNB#1 managing a CSG cell #1 and including a reception unit 21 configured to receive a transmission power control message from a radio base station eNB#A that receives a "proximity indication" from a mobile station UE communicating in a cell #A, when the mobile station UE detects an entry in to or an exit from a predetermined area #1, and a control unit 22 configured to control the transmission power of a signal in the CSG cell #1, based on the transmission power control message.

In the third characteristic of the present embodiment, when the reception unit 21 receives the transmission power control message indicating the reception of an "entering proximity indication" from the radio base station eNB#A, the control unit 22 may be configured to start the transmission of a signal in the CSG cell #1, in accordance with the transmission power control message.

In the third characteristic of the present embodiment, when the reception unit 21 receives the transmission power control message indicating the reception of a "leaving proximity indication" from the radio base station eNB#A, the control unit 22 may be configured to stop the transmission of a signal in the CSG cell #1, in accordance with the transmission power control message.

It is noted that the operation of the above-described the mobile station UE, the radio base station eNB/HeNB, the mobile switching center MME and the gateway device HeNB-GW may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the mobile station UE, the radio base station eNB/HeNB, the mobile switching center MME and the gateway device HeNB-GW. Further, such a storage medium or a processor may be arranged, as a discrete component, in the mobile station UE, the radio base station eNB/HeNB, the mobile switching center MME and the gateway device HeNB-GW.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

### Industrial Applicability

As described above, in accordance with the present invention, it is possible to provide a mobile communication method and a radio base station by which it is possible to efficiently realize "Energy Saving".

### [Reference Signs List]

- eNB, HeNB: Radio base station
- 11, 21: Reception unit
- 12: Transmission unit
- 22: Control unit

## Claims

1. A mobile communication method comprising:
a step A of transmitting, by a mobile station communicating in a cell of a first frequency, instruction information to a first radio base station managing the cell of the first frequency, when the mobile station detects an entry in to or an exit from a predetermined area corresponding to a cell of a second frequency for which the mobile station has the access permission; and
a step B of transmitting, by the first radio base station, a transmission power control message to a second radio base station managing the cell of the second frequency, in accordance with the instruction information; and
a step C of controlling, by the second radio base station, the transmission power of a signal in the cell of the second frequency, based on the transmission power control message.

2. The mobile communication method according to claim 1, wherein
in the step B, when the first radio base station receives the instruction information indicating that an entry by the mobile station in to the predetermined area has been detected, the first radio base station transmits a transmission power control message indicating the same, to the second radio base station, and
in the step C, the second radio base station starts the transmission of the signal in the cell of the second frequency, in accordance with the transmission power control message.

3. The mobile communication method according to claim 1, wherein
in the step B, when the first radio base station receives the instruction information indicating that an exit by the mobile station from the predetermined area has been detected, the first radio base station transmits a transmission power control message indicating the same, to the second radio base station, and
in the step C, the second radio base station stops the transmission of the signal in the cell of the second frequency, in accordance with the transmission power control message.

4. A radio base station managing a cell of a first frequency, comprising:
a reception unit configured to receive instruction information from a mobile station communicating in the cell of the first frequency, when the mobile station detects an entry in to or an exit from a predetermined area corresponding to a cell of a second frequency for which the mobile station has the access permission, and
a transmission unit configured to transmit a transmission power control message for controlling the transmission power of a signal in the second cell, to a radio base station managing the cell of the second frequency, in accordance with the instruction information.

5. A radio base station managing a cell of a second frequency, comprising:
a reception unit configured to receive a transmission power control message from a radio base station managing a cell of a first frequency that receives the instruction information from a mobile station communicating in the cell of the first frequency, when the mobile station detects an entry in to or an exit from a predetermined area corresponding to the cell of the second frequency for which the mobile station has the access permission, and
a control unit configured to control the transmission power of a signal in the cell of the second frequency, based on the transmission power control message.

6. The radio base station according to claim 5, wherein when the reception unit receives the transmission power control message indicating the reception of the instruction information indicating that the entry by the mobile station, in to the predetermined area, has been detected, from the radio base station managing the cell of the first frequency, the control unit is configured to start the transmission of a signal in the cell of the second frequency, in accordance with the transmission power control message.

7. The radio base station according to claim 5, wherein when the reception unit receives the transmission power control message indicating the reception of the instruction information indicating that the exit by the mobile station, from the predetermined area, has been detected, from the radio base station managing the cell of the first frequency, the control unit is configured to stop the transmission of a signal in the cell of the second frequency, in accordance with the transmission power control message.
